# EUROPEAN PATENT APPLICATION

(11) **EP 4 538 309 A1**
(43) Date of publication of application: **16.04.2025**
(21) Application number: 24202600.3
(22) Date of filing: 25.09.2024
(51) Int. Cl.: C08G 59/50, C08K 3/36, C09D 163/00

(54) **EPOXY COATING COMPOSITION**

(30) Priority: 12.10.2023 KR 20230136130
(71) Applicant: KCC Corporation, Seoul 06608 (KR)
(72) Inventor: LEE, Sang Min, 55148 Jeonju-si (KR); LEE, Hyung Jun, 55148 Jeonju-si (KR); JUNG, Kang Hoon, 55317 Wanju-gun (KR); JANG, Won Jun, 55317 Wanju-gun (KR)
(74) Representative: Pfenning, Meinig & Partner mbB

(57) **Abstract**

Provided is to an epoxy coating composition having excellent acid resistance and workability.

## Description

### BACKGROUND

### 1. Field

The present invention relates to an epoxy coating composition having excellent acid resistance and workability.

### 2. Description of the Related Art

Structures such as buildings, bridges, and roads are constantly exposed to external environments such as changing temperatures, moisture, acid rain, harmful gases, and vibrations, making it difficult for the structures to remain intact over a long period of time. Therefore, surfaces of the structures are coated with various coating compositions to be protected, and various studies are being conducted to improve properties of the coating compositions in order to form a coating film with excellent properties. As an example, Korean Patent Laid-open Publication No. 10-2008-0013188 discloses, as a coating composition for reducing maintenance and repair costs due to corrosion of structures under high-temperature and high-concentration acidic environments, an organic-inorganic composite coating composition including a novolac epoxy resin, a bisphenol A epoxy resin, a modified silicone resin, a plate-shaped inorganic filler, a non-plate-shaped inorganic filler, a leveling agent, a dispersant, and a solvent.

However, a typical epoxy coating composition is designed in a thick-film type, and thus, has excellent acid resistance, but cannot be coated into a thin film, so that there is a problem in that workability is poor and repair coating is not easy. Therefore, there is a need for the development of an epoxy coating composition with excellent acid resistance, as well as excellent workability by enabling thin-film coating.

### SUMMARY

An aspect of the present invention provides an epoxy coating composition having excellent acid resistance and workability.

According to an embodiment of the present invention, there is provided an epoxy coating composition comprising a main part which comprises an epoxy resin and two types of extender pigments having different particle diameters, and a curing part which comprises an amine resin.

The present invention provides an epoxy coating composition having excellent acid resistance and workability. The epoxy coating composition of the present invention has excellent acid resistance and appearance, and at the same time, is capable of being coated into a thin film by using a roller, and thus, has excellent workability and enables easy repair coating. The epoxy coating composition of the present invention is applicable as a coating for buildings, such as concrete flooring, and the like.

### DETAILED DESCRIPTION

Hereinafter, the present invention will be described in detail. However, the present invention is not limited only to the following description, and if necessary, each component may be variously modified or selectively mixed and used. Therefore, it is to be understood that all changes, equivalents, and alternatives falling within the spirit and scope of the present invention are intended to be included.

The "weight average molecular weight" used herein is measured by a typical method known in the art, and may be measured by, for example, a gel permeation chromatograph (GPC) method. The "viscosity" is measured by a typical method known in the art, and may be measured by using, for example, a Brookfield viscometer at room temperature (25 °C). The "particle size (D50)" is measured by a typical method known in the art, and may be measured by, for example, a laser particle size analyzer. Functional group values such as the "amine value" and the "hydroxyl group value" are measured by a typical method known in the art, and may be measured by, for example, a titration method.

The epoxy coating composition of the present invention comprises a main part which comprises an epoxy resin and two types of extender pigments having different particle diameters, and a curing part which comprises an amine resin.

### <Main part>

### Epoxy resin

The main part of the epoxy coating composition of the present invention comprises an epoxy resin. The epoxy resin forms a dense mesh structure by a curing reaction, thereby serving to improve mechanical properties such as acid resistance and durability of a coating film.

As the epoxy resin, an epoxy resin commonly used in the corresponding technical field may be used, and as an example, an epoxy resin including two or more epoxy groups in the molecular structure may be used. Non-limiting examples of the epoxy resin which may be used include a bisphenol A-type epoxy resin, an alicyclic-type epoxy resin, a cresol novolac-type epoxy resin, a dicyclopentadiene-type epoxy resin, a biphenyl-type epoxy resin, a naphthalene-type epoxy resin, an anthracene-type epoxy resin, a non-condensed cyclic-type polycyclic structure epoxy resin, a bisphenol fluorene-modified epoxy, and the like, and the epoxy resin may include one or more thereof. As an example, the epoxy resin may include a bisphenol A-type epoxy resin, and as another example, the epoxy resin may include a 4,4'-(1-methylethylidene)bisphenol polymer with (chloromethyl)oxirane.

The epoxy resin may have a weight average molecular weight of 200 g/mol to 500 g/mol, for example, 300 g/mol to 400 g/mol. If the weight average molecular weight is less than the above-described range, the pot life may be shortened, which may lead to poor workability, and an unreacted resin may remain, which may cause tackiness or degrade coating film strength, and if greater than the above-described range, cross-linking density may be low, which may lead to poor acid resistance and durability.

The epoxy resin may have an epoxy equivalent weight of 170 g/eq to 200 g/eq, for example, 180 g/eq to 200 g/eq. If the epoxy equivalent weight is less than the above-described range, the pot life may be shortened, which may lead to poor workability, and an unreacted resin may remain, which may cause tackiness or degrade coating film strength, and if greater than the above-described range, cross-linking density may be low, which may lead to poor acid resistance and durability.

The epoxy resin may have a viscosity (25 °C) of 10,000 cps to 15,000 cps, for example, 11,000 cps to 14,000 cps. If the viscosity (25 °C) is less than the above-described range, wetting may be degraded, which may lead to poor appearance, and if greater than the above-described range, workability may be degraded.

The epoxy resin composition may include the epoxy resin in an amount of 30 wt% to 45 wt%, for example, 32 wt% to 40 wt%, based on the total weight of the main part. If the content of the epoxy resin is less than the above-described range, workability, acid resistance, and bending resistance may become poor, and if greater than the above-described range, solvent resistance and dryness may become poor.

### Extender pigment

The main part of the epoxy coating composition of the present invention comprises an extender pigment. The extender pigment serves to improve properties of a coating film. As the extender pigment, silica, talc, calcium carbonate, magnesium carbonate, barium sulfate, or the like may be used, and any one thereof may be used alone or in combination of two or more thereof.

The extender pigment comprises two types of silica having different particle diameters. In this case, voids of silica with a larger particle size are filled by silica with a smaller particle size, so that dispersibility is improved, resulting in providing excellent coating film strength, and good workability and thixotropy are imparted, thereby enabling thin-film coating.

For example, the extender pigment may comprise a first silica having a particle size (D50) of 1 µm to 5 µm, for example, 3 µm to 5 µm, and a second silica having a particle size (D50) of 0.1 µm to 0.7 µm, for example, 0.2 µm to 0.5 µm. If the particle size of silica is less than 0.1 µm, oil absorption increases, thereby increasing the viscosity of a coating composition, which may lead to poor workability, and if the particle size of silica is greater than 5 µm, the dispersibility becomes poor, which may lead to poor appearance.

The first silica may have an oil absorption of 60 g/100 g to 150 g/100 g, for example, 90 g/100 g to 110 g/100 g, and the second silica may have an oil absorption of 300 g/100 g to 400 g/100 g, for example, 330 g/100 g to 370 g/100 g. By using two types of extender pigments having the above-described oil absorption, it is possible to improve the dispersibility of a coating composition, thereby providing excellent coating film strength, and to impart good workability and thixotropy, thereby enabling thin-film coating. If the oil absorption of silica is less than 60 g/100 g, thixotropy is not sufficiently imparted, which may make it difficult to perform thin-film coating, and if the oil absorption of silica is greater than 400 g/100 g, viscosity is increased, which may lead to poor roller workability.

The epoxy resin composition may include the first silica in an amount of 26 wt% to 40 wt%, for example, 31 wt% to 39 wt%, and the second silica in an amount of 0.1 wt% to 3 wt%, for example, 0.2 wt% to 2 wt%, based on the total weight of the main part. If the content of the first silica is less than the above-described range, the coating film strength may become poor, and if greater than the above-described range, the viscosity increases, which may lead to poor workability. If the content of the second silica is less than the above-described range, the storage properties and appearance may become poor, and if greater than the above-described range, the viscosity increases, which may lead to poor workability.

The mixing ratio of the first silica and the second silica may be a weight ratio of 10 to 140 : 1, for example, a weight ratio of 20 to 130 : 1. If the mixing ratio of the first silica to the second silica is less than the above-described range, the coating film strength may become poor, and if greater than the above-described range, the viscosity increases, which may lead to poor workability.

The extender pigment may further include barium sulfate. In this case, the coating film strength and workability may be further improved.

The barium sulfate may have a particle size (D50) of 0.4 µm to 0.8 µm, and an oil absorption of 15 g/100 g to 20 g/100 g. If the particle size of barium sulfate is less than the above-described range, the viscosity increases, which may lead to poor workability, and if greater than the above-described range, the dispersibility is poor, which may lead to poor appearance. If the oil absorption of barium sulfate is less than the above-described range, the dispersibility is poor, which may lead to poor appearance, and if greater than the above-described, the viscosity increases, which may lead to poor workability.

The epoxy resin composition may include the barium sulfate in an amount of 1 wt% to 5 wt%, for example, 1 wt% to 4 wt%, based on the total weight of the main part. If the content of the barium sulfate is less than the above-described range, the storage properties and appearance may become poor, and if greater than the above-described range, the viscosity increases, which may lead to poor workability.

### Solvent

The epoxy resin composition of the present invention may further include a solvent. The solvent serves to adjust the viscosity of a coating composition, and may use a non-reactive diluent. As the non-reactive diluent, xylene, benzyl alcohol, dodecylphenol, or the like may be used.

The solvent may be included in an amount satisfying a total of 100 wt% of the main part, and for example, may be included in an amount of 0.1 wt% to 15 wt% based on the total weight of the main part. If the content of the solvent is less than the above-described range, the viscosity increases, which may degrade workability, and if greater than the above-described range, the viscosity decreases, which may lead to good workability, but may degrade properties of a coating film.

### Additive

The main part of the epoxy coating composition of the present invention may further include, if necessary, an additive commonly used in the art, such as a colored pigment, a dispersant, a plasticizer, a leveling agent, an anti-foaming agent, a thixotropic agent, or the like.

The additive may be added within a content range known in the art, and as an example, may be included in an amount of 0.01 wt% to 15 wt% based on the total weight of the main part of the epoxy resin composition, but is not limited thereto.

### <Curing part>

### Amine resin

The curing part of the epoxy coating composition of the present invention comprises an amine resin.

As the amine resin, an alicyclic amine, a modified an alicyclic amine, a para-diaminodicyclohexylmethane (PACM), an M-xylene diamine (MXDA), an isophorone diisocyanate (IPDA), or the like may be used. As an example, the amine resin may comprise an alicyclic amine resin, and as another example, the amine resin may comprise para-diaminodicyclohexylmethane (PACM). In this case, acid resistance may be further improved by increasing cross-linking density.

The amine resin may have a viscosity (25 °C) of 350 cps to 700 cps, for example, 400 cps to 550 cps. If the viscosity of the amine resin is out of the above-described range, the workability may become poor, which may lead to poor appearance.

The amine resin may have an equivalent weight of 100 g/eq to 130 g/eq, for example, 105 g/eq to 115 g/eq. If the equivalent weight of the amine resin is less than the above-described range, the number of reactive groups of amine, which may be combined with epoxy is small, which may lead to poor acid resistance and coating film strength, and if greater than the above-described range, remaining reactive groups may cause appearance defects such as tackiness and amine blushing.

The amine resin may have an amine value of 235 mgKOH/g to 275 mgKOH/g, for example, 240 mgKOH/g to 260 mgKOH/g. If the amine value of the amine resin is less than the above-described range, the coating film strength and acid resistance may become poor, and if greater than the above-described range, tackiness and amine blushing may be generated, which may lead to poor appearance.

The epoxy resin composition may include the amine resin in an amount of 50 wt% to 70 wt%, for example, 55 wt% to 65 wt%, based on the total weight of the curing part. If the content of the amine resin is less than the above-described range, the acid resistance may become poor, and if greater than the above-described range, tackiness and amine blushing may be generated, which may lead to poor appearance.

### Solvent

The curing part of the epoxy resin composition of the present invention may further include a solvent. The solvent serves to adjust the viscosity of a coating composition, and a non-reactive diluent may be used. As the non-reactive diluent, xylene, benzyl alcohol, dodecylphenol, or the like may be used.

The solvent may be included in an amount satisfying a total of 100 wt% of the curing part, and for example, may be included in an amount of 25 wt% to 45 wt% based on the total weight of the curing part. If the content of the solvent is less than the above-described range, the viscosity increases, which may degrade workability, and if greater than the above-described range, the viscosity decreases, which may lead to good workability, but may degrade properties of a coating film.

### Additive

The curing part of the epoxy coating composition of the present invention may further include, if necessary, an additive commonly used in the art, such as a curing accelerator.

The curing accelerator may shorten curing time and improve coating film strength. The curing accelerator may have a viscosity (25 °C) of 120 cps to 250 cps, for example, 150 cps to 200 cps, and if the viscosity is out of the above-described range, the workability may become poor. The curing accelerator may have an amine value of 600 mgKOH/g to 700 mgKOH/g, for example, 610 mgKOH/g to 640 mgKOH/g, and if the amine value is less than the above-described range, the effect of promoting curing may be insufficient, and if greater than the above-described rage, the pot life is shortened, which may lead to poor workability. As the curing accelerator, an amine-based curing accelerator may be used, and as an example, tris-2,4,6-dimethylaminomethyl phenol may be used.

The epoxy resin composition may include the curing accelerator in an amount of 0.01 wt% to 10 wt%, for example, 3 wt% to 8 wt%, based on the total weight of the curing part. If the content of the curing accelerator is less than the above-described range, the curing rate may be degraded, and if greater than the above-described range, a coating may become brittle and may have poor weather resistance.

The additive may be added within a content range known in the art, and as an example, may be included in an amount of 0.01 wt% to 10 wt% respectively based on the total weight of the curing part, but is not limited thereto.

The epoxy coating composition of the present invention may include the main part and the curing part at a weight ratio of 3 to 5 : 1, for example at a weight ratio of 3.5 to 4.5 : 1. If the weight ratio of the main part to the curing part is less than the above-described range, the acid resistance and coating film strength may become poor, and if greater than the above-described range, appearance defects such as tackiness and amine blushing may be generated.

The epoxy coating composition of the present invention has excellent acid resistance and appearance, and at the same time, is capable of being coated into a thin film by using a roller, and thus, has excellent workability and enables easy repair coating. The epoxy coating composition of the present invention is applicable as a coating for buildings, such as concrete flooring, and the like. In addition, the epoxy coating composition of the present invention is applicable for repairing old coating films.

As an example, in a coating system comprising an upper coat, a middle coat, and a lower coat, the epoxy coating composition of the present invention is applicable as the upper coat. For example, the lower coat may be formed of a water-based epoxy two-component coating composition or an oil-based epoxy two-component coating composition, the middle coat may be formed of a solvent-free epoxy two-component coating composition, and the upper coat may be formed of the epoxy coating composition of the present invention. The epoxy coating composition of the present invention applied as the upper coat may further include non-slip powder to prevent slipping.

As another example, in a coating system comprising a lower coat and an upper coat, the epoxy coating composition of the present invention is applicable as the upper coat. For example, the lower coat may be formed of a water-based epoxy two-component coating composition or an oil-based epoxy two-component coating composition, and the upper coat may be formed of the epoxy coating composition of the present invention.

Hereinafter, the present invention will be described in more detail with reference to examples. However, the following examples are merely illustrative of the present invention, and are not intended to limit the scope of the present invention.

### [Examples 1-6]

According to the composition described in Table 1 below, a main part and a curing part were prepared, and the main part and the curing part were mixed at a weight ratio of 4 : 1 to prepare a coating composition of each example.

### [Comparative Examples 1-10]

According to the composition described in Table 2 below, a main part and a curing part were prepared, and the main part and the curing part were mixed at a weight ratio of 4 : 1 to prepare a coating composition of each comparative example.

**Table 1**

| | Components (parts by weight) | Example | | | | | |
|---|---|---|---|---|---|---|---|
| | | 1 | 2 | 3 | 4 | 5 | 6 |
| Main part | Epoxy resin-1 | 32.1 | 38.6 | | 32.1 | 32.1 | 43.7 |
| | Epoxy resin-2 | | | 38.6 | | | |
| | Epoxy resin-3 | | | | | | |
| | Epoxy resin-4 | | | | | | |
| | Acrylic polyol resin | | | | | | |
| | Polyester resin | | | | | | |
| | Silica-1 | 38.8 | 32.3 | 32.3 | 38.8 | 38.8 | 27.2 |
| | Silica-2 | 0.3 | 0.3 | 0.3 | 1.8 | 1.8 | 0.3 |
| | Barium sulfate | 2.5 | 2.5 | 2.5 | 1.0 | 1.0 | 2.5 |
| | Titanium dioxide | 13.1 | 13.1 | 13.1 | 13.1 | 13.1 | 13.1 |
| | Dispersant | 0.6 | 0.6 | 0.6 | 0.6 | 0.6 | 0.6 |
| | Plasticizer | 3.1 | 3.1 | 3.1 | 3.1 | 3.1 | 3.1 |
| | Leveling agent | 0.3 | 0.3 | 0.3 | 0.3 | 0.3 | 0.3 |
| | Anti-foaming agent | 0.8 | 0.8 | 0.8 | 0.8 | 0.8 | 0.8 |
| | Thixiotropic agent | 0.3 | 0.3 | 0.3 | 0.3 | 0.3 | 0.3 |
| | Solvent | 8.1 | 8.1 | 8.1 | 8.1 | 8.1 | 8.1 |
| | Total sum | 100.0 | 100.0 | 100.0 | 100.0 | 100.0 | 100.0 |
| | Silica-1/Silica-2 | 129.3 | 107.7 | 107.7 | 21.6 | 21.6 | 90.7 |
| Curing part | Amine resin | 63.5 | 63.5 | 63.5 | 63.5 | 56.1 | 63.5 |
| | Isocyanate resin | | | | | | |
| | Curing accelerator | 6.5 | 6.5 | 6.5 | 6.5 | 4.5 | 6.5 |
| | Solvent | 30 | 30 | 30 | 30 | 39.4 | 30 |
| | Total sum | 100.0 | 100.0 | 100.0 | 100.0 | 100.0 | 100.0 |

**[Table 2]**

| | Components (parts by weight) | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Main part | Epoxy resin-1 | 48.5 | 48.1 | 28.1 | 38.6 | 38.6 | 29.7 | | | | |
| | Epoxy resin-2 | | | | | | | | | | |
| | Epoxy resin-3 | | | | | | | 38.6 | | | |
| | Epoxy resin-4 | | | | | | | | 38.6 | | |
| | Acrylic polyol resin | | | | | | | | | 38.6 | |
| | Polyester resin | | | | | | | | | | 38.6 |
| | Silica-1 | 22.7 | 38.7 | 42.8 | 24.5 | 29.55 | | 32.3 | 32.3 | 32.3 | 32.3 |
| | Silica-2 | | | 0.3 | 3.8 | 0.05 | | 0.3 | 0.3 | 0.3 | 0.3 |
| | Barium sulfate | 2.5 | | 2.5 | 0.3 | 5.5 | 31.6 | 2.5 | 2.5 | 2.5 | 2.5 |
| | Titanium dioxide | 13.1 | | 13.1 | 19.6 | 13.1 | 23.1 | 13.1 | 13.1 | 13.1 | 13.1 |
| | Dispersant | 0.6 | 0.6 | 0.6 | 0.6 | 0.6 | 0.6 | 0.6 | 0.6 | 0.6 | 0.6 |
| | Plasticizer | 3.1 | 3.1 | 3.1 | 3.1 | 3.1 | 5.5 | 3.1 | 3.1 | 3.1 | 3.1 |
| | Leveling agent | 0.3 | 0.3 | 0.3 | 0.3 | 0.3 | 0.3 | 0.3 | 0.3 | 0.3 | 0.3 |
| | Anti-foaming agent | 0.8 | 0.8 | 0.8 | 0.8 | 0.8 | 0.8 | 0.8 | 0.8 | 0.8 | 0.8 |
| | Thixiotropic agent | 0.3 | 0.3 | 0.3 | 0.3 | 0.3 | 0.3 | 0.3 | 0.3 | 0.3 | 0.3 |
| | Solvent | 8.1 | 8.1 | 8.1 | 8.1 | 8.1 | 8.1 | 8.1 | 8.1 | 8.1 | 8.1 |
| | Total sum | 100 | 100 | 100 | 100 | 100 | 100 | 100 | 100 | 100 | 100 |
| | Silica-1/Silica-2 | | | 142.7 | 6.4 | 591 | | 107.7 | 107.7 | 107.7 | 107.7 |
| Curing part | Amine resin | 63.5 | 63.5 | 63.5 | 63.5 | 63.5 | 63.5 | 63.5 | 63.5 | | |
| | Isocyanate resin | | | | | | | | | 63.5 | 63.5 |
| | Curing accelerator | 6.5 | 6.5 | 6.5 | 6.5 | 6.5 | 6.5 | 6.5 | 6.5 | | |
| | Solvent | 30 | 30 | 30 | 30 | 30 | 30 | 30 | 30 | 36.5 | 36.5 |
| | Total sum | 100 | 100 | 100 | 100 | 100 | 100 | 100 | 100 | 100 | 100 |

### <Main part>

Epoxy resin-1: 4,4'-(1-methylethylidene)bisphenol polymer with (chloromethyl)oxirane (weight average molecular weight of 378 g/mol, equivalent weight of 192 g/eq, and viscosity (25 °C) of 13,700 cps)
Epoxy resin-2: 4,4'-(1-methylethylidene)bisphenol polymer with (chloromethyl)oxirane (weight average molecular weight of 320 g/mol, equivalent weight of 183 g/eq, and viscosity (25 °C) of 11,100 cps)
Epoxy resin-3: 4,4'-(1-methylethylidene)bisphenol polymer with (chloromethyl)oxirane (weight average molecular weight of 580 g/mol, equivalent weight of 225 g/eq, and viscosity (25 °C) of 20,500 cps)
Epoxy resin-4: 4,4'-(1-methylethylidene)bisphenol polymer with (chloromethyl)oxirane (weight average molecular weight of 183 g/mol, equivalent weight of 153 g/eq, and viscosity (25 °C) of 7,800 cps)
Acrylic polyol resin: Weight average molecular weight of 1,000 g/mol, OHV of 15 mgKOH/g, and viscosity (25 °C) of 350 cPs
Polyester resin: Weight average molecular weight of 2,500 g/mol, OHV of 25 mgKOH/g, and viscosity (25 °C) of 250 cPs
Silica-1: Particle size (D50) of 4 µm, and oil absorption of 100 g/100 g
Silica-2: Particle size (D50) of 0.25 µm, and oil absorption of 350 g/100 g
Barium sulfate: Particle size (D50) of 0.6 µm, and oil absorption of 17.5 g/100 g
Titanium dioxide: Purity of 95%, and oil absorption of 13 g/100 g
Dispersing agent: BYK P104
Plasticizer: Dodecyl Phenol
Leveling agent: Tego 1484
Anti-foaming agent: BYK-066N
Thixiotropic agent: Bentone 27
Solvent: Xylene

### <Curing part>

Amine resin: Alicyclic amine resin (viscosity (25 °C) of 450 cps, equivalent weight of 110 g/eq, and amine value of 250 mgKOH/g)
Isocyanate resin: Equivalent weight of 180 g/eq, and NCO% of 23%
Curing accelerator: Tris-2,4,6-dimethylaminomethyl phenol (viscosity (25 °C) of 185 cps, and amine value of 620 mgKOH/g)
Solvent: Xylene

### [Properties evaluation]

Properties of the coating composition of each example and comparative example were measured according to the following methods, and the results are shown in Tables 3 and 4 below.

### Roller workability

The coating composition of each example and comparative example was diluted with thinner to a weight ratio of 10% and coated using a roller, and then whether a coating film was formed well or not was evaluated.

### [Evaluation criteria]

4: Excellent (good cratering and good anti-foaming properties)
3: Good (good cratering and poor anti-foaming properties)
2: Poor (poor cratering and good anti-foaming properties)
1: Very poor (poor cratering and poor anti-foaming properties)

### Appearance

The coating composition of each example and comparative example was coated with a roller on a slate plate, and then the appearance thereof was observed.

### [Evaluation criteria]

4: Excellent, 3: Good, 2: Poor, 1: Very poor

### Pot life (minute)

80 vol% (500 g to 600 g) of the coating composition of each example and comparative example was placed in a tin can, and a stick test was performed thereon in a constant-temperature and constant-humidity state to measure a period of time during which the stick did not move.

### Curing time (hour)

The coating composition of each example and comparative example was used to form a coating film (DFT of 70 µm), and then curing (even if the coating film is strongly pressed with a finger, a fingerprint does not remain on the film) time was measured according to KS M 5000:2019.

### Acid resistance

An lower coat paint (KCC, Unifoxy lower coat) was coated on a slate plate by using a roller to form a coating film (DFT of 50 µm), and after 24 hours, the epoxy coating composition of each example and comparative example was coated on the slate plate by using a roller as an upper coat (DFT of 70 µm). Each specimen, which was completely dried for 7 days after the coating of the upper coat, was spot-test using a solution of 70% sulfuric acid, 20% hydrochloric acid, 22% hydrogen peroxide, and 60% phosphoric acid, and the appearance of the coating film was evaluated after 72 hours at room temperature (25 °C). The average values of the evaluation results for the above-described four types of solutions are shown in Tables 3 and 4.

### [Evaluation criteria]

4: Excellent, 3: Good, 2: Poor, 1: Very poor

**Table 3]**

| Properties | Target | Example | | | | | |
|---|---|---|---|---|---|---|---|
| | | 1 | 2 | 3 | 4 | 5 | 6 |
| Roller workability | 3 or greater | 4 | 4 | 4 | 4 | 4 | 3 |
| Appearance | 3 or greater | 3 | 4 | 4 | 3 | 3 | 3 |
| Pot life (minutes) | 60 or more | 85 | 80 | 70 | 85 | 100 | 75 |
| Curing and drying (minutes) | 20 or less | 15 | 15 | 14 | 15 | 18 | 14 |
| Acid resistance | 3 or greater | 3 | 4 | 4 | 3 | 3 | 3 |

**Table 4]**

| Properties | Target | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Roller workability | 3 or greater | 2 | 1 | 2 | 3 | 2 | 1 | 3 | 3 | 1 | 1 |
| Appearance | 3 or greater | 2 | 1 | 2 | 2 | 2 | 1 | 3 | 2 | 1 | 1 |
| Pot life (minutes) | 60 or more | 75 | 75 | 60 | 80 | 80 | 60 | 90 | 55 | Not cured | Not cured |
| Curing and drying (minutes) | 20 or less | 14 | 14 | 13 | 15 | 15 | 13 | 14 | 12 | Not cured | Not cured |
| Acid resistance | 3 or greater | 2 | 2 | 3 | 2 | 4 | 2 | 2 | 2 | Not cured | Not cured |

As shown in Tables 3 and 4 above, the epoxy coating composition of each of Examples 1 to 6 according to the present invention exhibited excellent properties overall in all measurement items of workability, appearance, pot life, curing properties, and acid resistance. On the other hand, compared to the epoxy coating composition of each of Examples, the epoxy coating composition of each of Comparative Examples 1 and 2 in which only one type of silica was included, Comparative Examples 3 to 5 in which the mixing ratio of the two types of silica was out of the range of the present invention, Comparative Example 6 in which no silica was included, Comparative Examples 7 and 8 in which an epoxy resin (Epoxy Resin 3 and 4) out of the molecular weight range of the present invention was used, and Comparative Examples 9 and 10 in which an acrylic polyol resin or a polyester resin was used instead of an epoxy resin, and an isocyanate resin was used instead of an amine resin exhibited poor properties overall in the measurement items.

## Claims

1. An epoxy coating composition comprising a main part comprising an epoxy resin and an extender pigment; and a curing part comprising an amine resin,
wherein the epoxy resin has a weight average molecular weight of 200 g/mol to 500 g/mol,
the extender pigment comprises first silica having a particle size (D50) of 1 µm to 5 µm and second silica having a particle size (D50) of 0.1 µm to 0.7 µm, and
the mixing ratio of the first silica and the second silica is a weight ratio of 10 to 140 : 1.

2. The epoxy coating composition of claim 1, wherein the epoxy resin has an epoxy equivalent weight of 170 g/eq to 200 g/eq, and a viscosity (25 °C) of 10,000 cps to 15,000 cps.

3. The epoxy coating composition of claim 1, wherein the first silica has an oil absorption of 60 g/100 g to 150 g/100 g, and the second silica has an oil absorption of 300 g/100 g to 400 g/100 g.

4. The epoxy coating composition of claim 1, wherein the extender pigment further comprises barium sulfate, and
the barium sulfate has a particle size (D50) of 0.4 µm to 0.8 µm, and an oil absorption of 15 g/100 g to 20 g/100 g.

5. The epoxy coating composition of claim 1, wherein the amine resin comprises an alicyclic amine resin; and
the amine resin has a viscosity (25 °C) of 350 cps to 700 cps, an equivalent weight of 100 g/eq to 130 g/eq, and an amine value of 235 mgKOH/g to 275 mgKOH/g.

6. The epoxy coating composition of claim 1, wherein the epoxy coating composition comprises 30 wt% to 45 wt% of the epoxy resin, 26 wt% to 40 wt% of the first silica, and 0.1 wt% to 3 wt% of the second silica, based on the total weight of the main part; and 50 wt% to 70 wt% of the amine resin based on the total amount of the curing part.
